# FASCICULE DE BREVET EUROPEEN

(11) **EP 1 487 270 B1**
(45) Date de publication et mention de la délivrance du brevet: **04.11.2009**
(21) Numéro de dépôt: 03744887.5
(22) Date de dépôt: 27.03.2003
(51) Int. Cl.: A01N 43/16

(54) **UTILISATION D'UN POLYSACCHARIDE POUR AUGMENTER LA TOLERANCE DES PLANTES AU STRESS ABIOTIQUE**
VERWENDUNG VON EINEM POLYSACCHARIDE ZUR ERHÖHUNG DER TOLERANZ GEGEN ABIOTISCHE STRESS IN PFLANZEN
USE OF A POLYSACCHARIDE FOR INCREASING THE RESISTANCE TO ABIOTIC STRESS IN PLANTS

(30) Priorité: 27.03.2002 FR 0203849
(43) Date de publication de la demande: 22.12.2004
(73) Titulaire: CENTRE NATIONAL DE LA RECHERCHE SCIENTIFIQUE (CNRS), 75794 Paris Cedex 16 (FR)
(72) Inventeur: LIENART, Yvette, Janine, F-38410 Uriage (FR); HEYRAUD, Alain, Charles, Abel, F-38113 Veuret-Voroize (FR)
(74) Mandataire: Grosset-Fournier, Chantal Catherine
(86) Numéro de dépôt international: PCT/FR2003/000969
(87) Numéro de publication internationale: WO 2003/079785

(56) Documents cités:
- WO-A-01/00025
- WO-A-02/26037
- US-A- 5 602 111
- OZERETSKOVSKAYA O L ET AL: "OLIGOSACCHARINS AS REGULATORY MOLECULES OF PLANTS" RUSSIAN JOURNAL OF PLANT PHYSIOLOGY, MOSCOW, RU, vol. 43, no. 5, 1996, pages 648-655, XP002061729 ISSN: 1021-4437

## Description

La présente invention a pour objet de nouvelles utilisations de composés comprenant une structure osidique contenant des enchaînements X, F et G dans le domaine phytosanitaire.

Les parois cellulaires des fruits et des végétaux sont formés de polysaccharides, dont principalement la pectine, la cellulose et le xyloglucane qui intervient dans la mise en place des parois (Levy S et al., Plant J. 1997, 11(3) : 373-86). Le xyloglucane se retrouve également en grande quantité dans l'endosperme des graines des Dicotylédones.

Le xyloglucane est un polymère de 1,4-β-glucane substitué différemment selon son origine. Chez les Dicotylédones, les substitutions des chaînes linéaires de 1,4 β-D-glucane impliquent le plus souvent des ramifications de type 1,6 α-D-xylosyl, ou 1,6 α-D-xylose 1,2 (β-D-galactosyl, et du fucose peut être associé, en position terminale, au galactose, soit une ramification latérale de type 1,6 α-D-xylose 1,2 β-D-galactose 1,2 α-L-fucosyl. Toujours chez les Dicotylédones, le résidu fucose est absent de l'endosperme, et il peut être remplacé par le résidu α-L-arabinose, par exemple chez certaines Solanacées. Le xyloglucane des Monocotylédones diffère de celui des Dicotylédones par un taux plus faible de substitution par les résidus xylose, galactose et par l'absence de fucose. Le xyloglucane forme avec les microfibres de cellulose des structures pontées qui constituent l'ossature et assurent la flexibilité de la paroi cellulaire des végétaux (Pauly M, Albersheim P, Darvill A , York WS (1999) Plant J, 20 (6): 629-39).

Le xyloglucane est un substrat d'endoxyloglucanases (Vincken JP, Beldman G, Voragen AG Carbohydr Res (1997) 13, 298(4):299-310) ou de xyloglucane endotransglycosylase (Steele NM, Fry SC, Biochem J (1999) 15, 340, 1, 207-211), à savoir d'activités enzymatiques aptes à modifier la structure des parois cellulaires au cours de l'élongation cellulaire, en période de germination, de fructification par exemple et qui sont dépendantes d'hormones notamment d'auxines (Hetherington PR et Fry S. (1993) Plant Physiology, 103, 987-992), et de gibbérellines (Maclachlan G et Brady C (1994) Plant Physiol 105,965-974).

Le xyloglucane, en particulier un oligomère fucosylé, le nonasaccharide XXFG (décrit dans Fry et al. (1993) Physiologia Plantarum, 89, 1-3), est bien connu pour son effet antiauxinique (Mac Dougall CJ et Fry SC (1989) Plant Physiol 89, 883-887). A l'opposé, des oligomères sans fucose mais avec du galactose comme les oligomères XXLG et XLLG ont un effet auxinique (Mc Dougall GJ et Fry SC (1990) Plant Physiology 93, 1042-1048). Ozeretskovskaya *et al.* rapportent les effets du xyloglucane et de ses dérivés sur la croissance des plantes, la morphogénèse et les réponses aux pathogènes et WO 01/00025 décrit l'utilisation de glucuronanes et de glucuronides dérivés pour l'adaptation de plantes à des stress abiotiques

Par ailleurs, de nombreux signaux génèrent des espèces activées d'oxygène (on parle également de "burst oxydatif"). Des espèces activées d'oxygène sont bien connues pour être libérées au cours des interactions plante-pathogène. Des oligosaccharides de diverse origine (acide polygalacturonique, chitosane, O-glycanes ..) ont été répertoriés pour leur capacité à générer un burst oxydatif (Low PS et Heinstein PF (1986) Arch. Biochem. Biophys. 249, 472-479; Rogers KR., Albert F, et Anderson AJ (1988) Plant Physiol 86, 547-553; Apostol I, Heinstein PF et Low PS (1989) Plant Physiol 90, 109-116; Vera-Estrella R, Blumwald E et Higgins VJ (1992) Plant Physiol. 1208-1215; Bolwell GP, Butt VS, Davies DR et Zimmerlin A. (1995) Free Rad. Res. Comm. 23, 517-532 ; Orozco-Cardenas M et Ryan CA (1999) PNAS, 25, 96, 11, 6553-655; Nita-Lazar M, Iwahara S, Takegawa K, Liénart Y (2000) J Plant Physiol, 156, 306-311). Les enzymes NAD(P)H oxydo-reductases pour la libération d'anion superoxyde (Van Gestelen PV, Asard A, Caubergs RJ (1997) Plant Physiol 115, 543-550) et peroxydases pour la formation de peroxyde ou d'anion superoxyde ou de radicaux OH, sont impliquées (Baker CJ et Orlandi EW (1995) Ann. Rev. Phytopathol, 33, 299-321; Chen SX et Schopfer P (1999) Eur Bioch 260, 726- 735). D'autres signaux (acide salicylique, jasmonates, cGMP, NO...) génèrent aussi un burst (Chen Z, Malamy J, Henning J, Conrath U, Sanchez-Casas P, Silva H, Ricigliano J, Klessig DF (1995) Proc Natl Acad Sci USA, 92, 4134-4137; Voros K, Feussner I, Kuhn H, Lee J, Graner A, Lobler M, Parthier B, Wasternack C Eur J Biochem (1998) 15, 251, 36-44; Durner J, et Klessig J, Wendehenne D, Klessig DF (1998) Proc Natl Acad Sci USA, 95, 10328-10333; Dumer D et Klessig DF (1999) Current Opinion in Plant Biology, 2, 369-374).

Des conditions extrêmes d'environnement (sécheresse, froid, UV, salinité...) déclenchent le même effet.

Le rôle majeur de H₂O₂ dans la génération du burst comme dans la régulation du stress oxydant repose :
- sur sa formation par dismutation à partir de l'anion superoxyde (Bolwell GP, Davies DR, Gerrish C, Auh CK et Murphy TM (1998) Plant Physiol 116, 1379-1385),
- sur son utilisation dans des séquences du métabolisme des acides gras C₁₈ (pour la peroxydation de lipides (Koch E, Meier BM, Eiben H-G, Slusarenko A (1992) Plant Physiol 99, 571-576) ou pour la synthèse d'octadécanoïdes et de leurs dérivés dont certains comme les méthyl-jasmonates sont des métabolites à fonction hormonale,
- sur sa fonction de substrat pour des enzyme peroxydase et catalase, propriété limitant l'accumulation de peroxyde toxique pour la cellule (Baker CJ, Harmon GL, Glazener JA et Orlandi EW (1995) Plant Physiol, 108, 353-359).

Les espèces activées d'oxygène, l'anion superoxyde en particulier, contrôlent différentes voies métaboliques. Elles interviennent dans :
- la biosynthèse des polyamines : des monoamines sont oxydées en aldéhydes avec production de NH₃ et de peroxyde. L'oxydation de la L-arginine par la nitrite-synthase aboutit à la formation d'un précurseur de polyamine (L-citrulline),
- la synthèse de l'éthylène,
- la synthèse des gibbérellines. Plus de 20 oxydases sont impliquées dans la régulation de la biosynthèse des gibbérellines.

Les espèces activées d'oxygène interviennent dans des étapes de transduction de signaux, parce qu'elles sont associées à l'activité de liaison de récepteurs ou à l'activité d'enzymes de transduction (Jabs T, Tschöpe M, Colling C, Hahlbrock K et Scheel D (1997) Proc Natl Acad Sci USA 29, 94, 9, 4800-4805; Dumer J, Wendehenne D, Klessig DF (1998) Proc Natl Acad Sci USA, 95, 10328-10333).

Elles interviennent dans la régulation du potentiel redox cellulaire par l'intermédiaire des groupements thiols (conversion GSSG-GSH, cystine-cystéine, etc..). A ce titre, elles contrôlent des processus de sénescence qui se manifestent à certaines phases de la floraison et de fructification dans différents organes.

Le burst oxydatif interfère avec le métabolisme hormonal, le potentiel le plus performant pour réguler les stades de floraison et de fructification (en particulier leur déclenchement et leur durée sont programmés par une balance hormonale (rapport auxine/cytokinine par exemple), et les espèces activées d'oxygène, dont le peroxyde, contrôlent la synthèse des polyamines).

Un des buts de la présente invention est de fournir de nouvelles compositions utilisables dans le domaine phytosanitaire et plus particulièrement pour lutter contre le stress abiotique chez les plantes.

L'invention concerne l'utilisation du composé XFG de formule 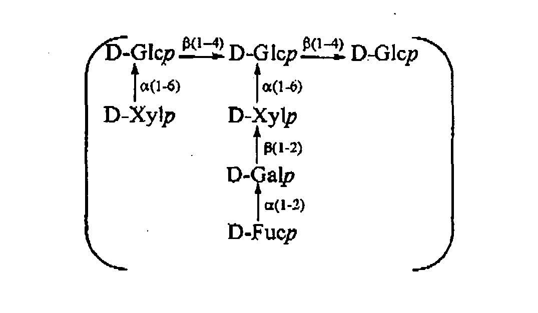 dont le résidu glucose en position terminale est réduit ou non,
dans le cadre de l'adaptation des plantes à un stress abiotique, tel que l'adaptation au froid, ou à un stress hydrique tel que la sécheresse, l'humidité ou la salinité.

L'invention concerne également l'utilisation du composé XFG **caractérisée en ce qu'**elle comprend une étape de traitement des plantes avec au moins un composé tel que défini ci-dessus, notamment par irrigation du sol sur lequel ces plantes sont cultivées, avec une composition comprenant ledit composé, ou par enrobage des semences avec une telle composition, ou par pulvérisation foliaire en champ d'une telle composition sur les plantes à traiter.

Avantageusement, les compositions susmentionnées comprenant au moins un composé défini ci-dessus et utilisées dans le cadre de la présente invention, se présentent en tant qu'intrant agricole sous forme solide (notamment poudre, granulés, pastilles), ou sous forme liquide (notamment en solution aqueuse), associé ou non à d'autres composants d'intrant agricole.

Parmi les plantes susceptibles d'être traitées dans le cadre de la présente invention, on citera principalement les plantes agronomiquement utiles, telles que la vigne, les arbres fruitiers (notamment pommier, poirier, noyer), les céréales (notamment riz, orge), les oléagineux (notamment soja, colza, tournesol), les protéagineux (notamment les pois), et les cultures maraîchères (notamment les tomates).

L'invention concerne également l'utilisation susmentionnée de composés définis ci-dessus, tels qu'obtenus :
- à partir de plantes, notamment par extraction de semences, feuilles, racines, fruits, en particulier à partir de pommes (*Malus malus* L., *Rosaceae*), notamment selon la méthode décrite dans Vincken JP, Beldman G, Niessen WMA,Voragen AGJ (1996) Carbohydrate Polymers, 29, 1, 75-85 ; Spronk BA, Rademaker GJ, Haverkamp J, Thomas-Oates JE, Vincken JP, Voragen AG, Kamerling JP, Vliegenthart JF (1997) Carbohydrate Research, 305, 2, 233-242); le procédé se déroule en 3 étapes: a) extraction du polymère xyloglucane de la biomasses par traitement alcalin suivi d'une dépectinisation par voie enzymatique; b) hydrolyse du polymère à l'aide de cellulases et plus particulièrement d'endo 1-4 β D glucanase isolée de *Trichoderma viride*; c) purification d'oligomères par chromatographie d'exclusion sur Bio-Gel P-2 suivie d'une chromatographie d'échange d'anions sur système Dionex.
- à partir de suspensions cellulaires de plantes, notamment de
   . *Rubus fruticosus* L. en particulier selon Joseleau JP, Cartier N, Chambat G, Faik A, K Ruel (1992), Biochimie, 74,81-88;
   . *Rosa* sp. en particulier selon Fry SC (1989) J.Exp.Bot. 40, 1-11; Mc Dougall, G.J. Fry SC (1991) Carbohydrate Research 219, 123-132,
le procédé se déroulant en 3 étapes: a) extraction du polymère xyloglucane des parois cellulaires par traitement alcalin couplé à une dépectinisation par voie chimique ou bien par déprotéinisation couplée à un traitement alcalin; b) hydrolyse du polymère à l'aide de cellulases et plus particulièrement d'endo 1-4 β D glucanase isolée de *Trichoderma viride*; c) purification d'oligomères par chromatographie d'exclusion sur Bio-Gel P-2 suivie d'un fractionnement par chromatographie d'échange d'anions sur système Dionex ou par chromatographie d'exclusion sur Bio-Gel P-2 suivie d'un fractionnement par chromatographie en phase inverse sur colonne C₁₈ ou par échange d'anions sur système Dionex; les cellulases peuvent être des enzymes obtenues par fermentation de souches bactériennes génétiquement modifiées ou non ou obtenues par voie recombinante.

L'invention a également pour objet l'utilisation susmentionnée de composés définis ci-dessus, tels qu'obtenus :
*par synthèse chimique, notamment selon la méthode décrite dans Pavlova ZN, * Ash AO, Vnuchkova VA, Babakov AV, Torgov VI, Nechaev OA, Usov AI, Shibaev VN (1992) Plant Science 85, 131-134; ou sur la base des travaux de Watt D. K., Brasch D.J, Larsen D. S, Melton L. D, Simpson J Carbohydrate Research, 325, 2000, 300-312,
* par synthèse chemoenzymatique, notamment à partir d'oligomères de xyloglucane modifiés par activité endo-transglycosylase (β-D-glucosidase, α-(β) L-xylodidase, β-D-galactosidase) selon York W.S., Harvey L.K., Guillen R., Alberheim P., Darvill A., Carbohydrate Research, 1993, 248, 285-301 ou par activité endo transxyloglucanases selon G. Maclachlan, C. Brady, Plant Physiology, 105, 1994, 965-974) ou par activité fucosyltranférase (s) d'origine végétale ou animale selon Baydoun E. A.-H., Abdel-Massih R. m, Dani D, Rizk S, Bret C. T, Journal of Plant Physiology, 158, 2000, 145-150 ; Faik A, Bar Peled M, DeRocher AE, Zeng W, Perinn RM, Wilkerson C, Raikhel NV, Keegstra K J Biol Chem, 2000, 275,20,
* par voie recombinante,
* par hydrolyse du polymère xyloglucane ou à partir d'oligomères tels qu'obtenus de polymères ou de glycanes représentant la partie glycanique de glycoprotéines à partir d'une dégradation enzymatique de xyloglucanes présents dans des biomasses telles que :
   1/ les fruits et légumes, et plus particulièrement, poivrons, tomates, pommes de terre, olives et pommes, ou de résidus issus de ces biomasses (« pomaces »...) selon les méthodes décrites dans :
      Spronk B.A., Rademaker G.J., Haverkamp J., Thomas-Oates J.E., Vincken J.P., Voragen A.G., Kamerling J.P., Vliegenthart J.F., Carbohydrate Research, 305, 1997, 233-242,
      Renard C.M.G.C., Lomax J.A., Boon J.J., Carbohydrate Research, 232, 1992, 303-320,
      Vincken J.P., Beldman G., Niessen W.M.A., Voragen A.G.J., Carbohydrate Polymers, 29 (1996) 75-85 ;
   2/ les suspensions cellulaires (Rubus fructicosos, sycomore) selon :
      Joseleau J.P., Cartier N., Chambat G., Faik, A., Ruel K., Biochimie, 74 (1992) 81-88,
      Augur C., Yu L., Ogawa T., Sinay P., Darvill A.G., Albersheim P., Plant Physiology, 99 (1992) 180-185 ;
   3/ par fermentation de microorganismes (bactéries, champignons...) génétiquement modifiés ou non ;
   4/ les graines (capucine, Hymenaea,...) selon McDougall G.J., ry S.C., Plant Physiology, 89 (1989) 883-887,
   5/ les feuilles, et plus particulièrement celles d'*Hymenaea courbaril,* Busato A.P., Vargas-Rechia C.G., Reicher F., Phytochemistry, 58 (2001) 525-531,
en utilisant des enzymes qui sont :
. des xyloglucanases (Garcia-Garrido J.M., Rejon-Palomares A., Ocampo J.A., Garcia-Romera I ., Mycol. Res., 103 (1999) 882-886),
. des cellulases, et plus particulièrement des endo β-1,4 glucanases de *Trichoderma viride* (Vincken JP., de Keiser A., Beldman G., Voragen A.G., J., Plant Physiology, 108, 1995, 1579-1585), de *Tricoderma. Reesei* (Hasper A.A., Dekkers E., van Mil M., van de Vondervoort P.J.L., de Graaff L.H., Applied and Environmental Microbiology, 68, 2002, 1556-1560) ou d'*Aspergillus oryzae* (Kato Y, Matsuda K., Agric. Biol. Chem., 44, 1980, 1759-1766),
. des exo cellulases comme celles d'*Irpex lacteus*,
lesdites enzymes étant :
. soit isolées de souches bactériennes ou fongiques génétiquement modifiées ou non, ou obtenues par voie recombinante (Pauly M, Andersen LN, Kaupinnen S, Kofod LV, York WS, Albersheim P, Darvill A (Glycobiology 1999, 9, 1, 93-100),
. utilisées seules ou en mélange associées de préférence avec des enzymes pectolytiques (polygalacturonases, pectine estérases, pectine lyases) selon Renard C.M.G.C., Searle-can Leewen M.J.F., Voragen A.G.J., Thibault J.F., Pilnik W., Carbohydrate Polymers, 14, 1991, 295-314, ou bien remplacées par des enzymes à spectre large de type pectolytique.

Le mélange d'oligomères obtenu par hydrolyse du polymère est fractionné en degré de polymérisation (DP) par chromatographie d'exclusion stérique sur colonne de Bio-Gel et les oligosaccharides de DP d'intérêt sont ensuite séparés en fonction de caractéristiques structurales par chromatographie haute performance (HPLC).

Plusieurs systèmes sont susceptibles d'être utilisés parmi la chromatographie sur échangeur d'anions (HPAEC) ou sur colonne DIONEX (Vincken J.P., Beldman G., Niessen W.M.A., Voragen A.G.J., Carbohydrate Polymers, 29, 1996, 1, 75-85), et la chromatographie d'affinité sur phase normale (Kakegawa K., Edashige Y., Ishii T., Phytochemistry, 47, 1998, 767-771) ou phase inverse (Watt D.K., Brash D.J., Larsen D.S., Melton L.D., Carbohydrate Polymers, 39, 1999, 165-180).

La structure de chaque oligosaccharide est ensuite confirmée par des méthodes spectroscopiques (RMN et spectrométrie de masse) (York W.S., van Halbeek H., Darvill A.G., Albersheim P., Carbohydrate Researh, 200, 1990, 9-31).

L'invention sera davantage illustrée à l'aide de la description détaillée qui suit du potentiel éliciteur de composés selon l'invention chez la vigne , à savoir de l'effet inducteur d'une résistance au froid

Des plants provenant de différents cépages dont le cépage *Pinot noir* sont utilisés pour l'étude. Chaque échantillon, composé de 5 plants, est traité par pulvérisation foliaire à différents stades végétatifs de l'échelle BBCH avec l'éliciteur xyloglucane : heptasaccharide XFG en solution à des doses variables ; la vaporisation de 2.5ml de solution par plante se fait à l'aide d'un vaporisateur (écart de +/- 1%).

Après l'application de l'éliciteur, les plants ont été exposés à un stress froid d'intensité et de durée variable. Après l'exposition au froid, les plants sont mis en chambre climatique à 20°C avec une alternance jour/nuit de 12h. L'aspect des feuilles est observé 24h, 72h après la sortie du froid. Les effets de froid sont évalués en observant les nécroses foliaires induites par le gel et les plantes sont conservées plusieurs mois pour suivre leur développement ultérieur.

Les résultats sur 50 plants et relatifs à 10 réplications sont exprimés par l'indice de protection l_{f} (%) = 100-P ; P, étant la proportion de feuilles nécrosées. Les résultats concernant les plants témoins T traités à l'eau et les plants élicités par l'heptasaccharide : XFG ou XFGol ont été exprimés par l'indice de protection l_{f} (%) mesuré 24h après le stress.

### Résultats :

Cépage : Pinot noir au stade BBCH 13
Température : 3,5°C durée 180 min

| | **T (l_{f})** | **XFG (l_{f})** | **XFGol (l_{f})** |
|---|---|---|---|
| dose : 33 mg/l | 75 | 100 | 100 |
| dose : 33 µg/l | 75 | 100 | 100 |

Par ailleurs, on a noté que l'application de l'éliciteur :
- apporte aussi un effet de protection contre le gel sur les cépages Chenin, Chardonnay, Cabernet sauvignon, Pinot meunier, Merlot, Grolleau,
- ne change pas le développement de la vigne,
- a un effet protecteur contre le gel qui se maintient plusieurs jours.

Les plants traités par l'éliciteur xyloglucane à la dose de 3,3 mg/l résistent au stress froid qui détruit les feuilles des témoins traitées à l'eau : la coloration des feuilles des plants élicités reste normale au lieu de virer au vert sombre dès le dégel (comme cela s'observe pour les témoins traités à l'eau), et aucun signe de nécrose n'apparaît après 24 h comme cela s'observe pour les témoins traités à l'eau).

On a noté que l'application de l'éliciteur n'apporte pas de perturbation dans l'évolution de la plante étant donné que le développement des plants élicités après le stress froid est comparable à celui des plants témoins non exposés au froid.

## Revendications

1. Utilisation du composé XFG de formule 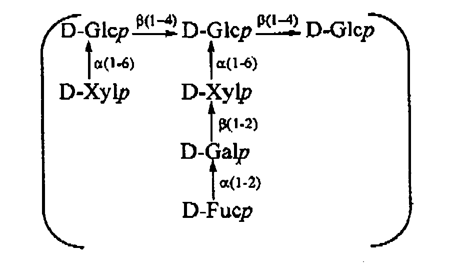 dont le résidu glucose en position terminale est réduit ou non,
dans le cadre de l'adaptation des plantes à un stress abiotique, tel que l'adaptation au froid, ou à un stress hydrique tel que la sécheresse, l'humidité ou la salinité.

2. Utilisation selon la revendication 1 **caractérisée en ce qu'**elle comprend une étape de traitement des plantes avec au moins un composé défini dans la revendication 1, notamment par irrigation du sol sur lequel ces plantes sont cultivées, avec une composition comprenant ledit composé, ou par enrobage des semences avec une telle composition, ou par pulvérisation foliaire en champ d'une telle composition sur les plantes à traiter.

## Claims

1. Use of compound XFG of formula 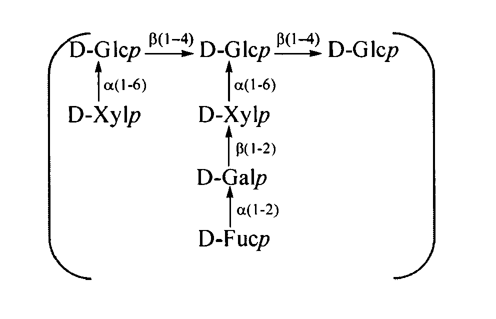 whose glucose residue at the terminal position is reduced or not,
in the frame the adaptation of plants to an abiotic stress, such as adaptation to the cold, or to a hydric stress such as drought, humidity or salinity,.

2. Use according to claim 1 wherein said use comprises a stage of treatment of the plants with at least one compound according to claim 1, in particular by irrigation of the soil in which these plants are cultivated, with a composition comprising said compound, or by coating the seeds with such a composition, or by foliar spraying of such a composition in the field on the plants to be treated.

## Patentansprüche

1. Verwendung der Verbindung XFG mit der Formel: 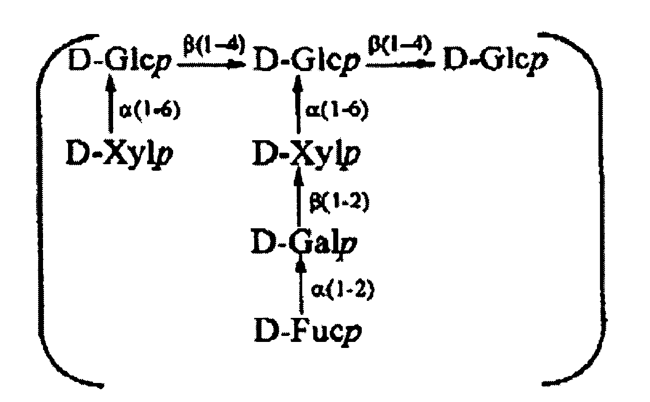 wobei der Glucoserest an der Endstellung reduziert ist oder nicht,
im Rahmen der Anpassung von Pflanzen an einen abiotischen Stress, wie etwa der Anpassung an Kälte, oder an einen Trockenstress, wie etwa Dürre, an Feuchtigkeit oder an Salzhaltigkeit.

2. Verwendung nach Anspruch 1, **dadurch gekennzeichnet, dass** sie einen Schritt der Behandlung der Pflanzen mit mindestens einer Verbindung umfasst, die in Anspruch 1 definiert ist, insbesondere durch Bewässerung des Bodens, auf dem diese Pflanzen angebaut werden, mit einer Zusammensetzung, die die Verbindung umfasst, oder durch Beschichten der Samen mit einer solchen Zusammensetzung, oder durch Besprühen der Blätter der zu behandelnden Pflanzen auf dem Feld mit einer solchen Zusammensetzung.
